# EUROPÄISCHE PATENTSCHRIFT

(11) **EP 2 988 016 B1**
(45) Veröffentlichungstag und Bekanntmachung des Hinweises auf die Patenterteilung: **14.11.2018**
(21) Anmeldenummer: 15179949.1
(22) Anmeldetag: 06.08.2015
(51) Int. Cl.: F16D 55/226

(54) **ZUSPANNVORRICHTUNG FÜR EINE DREHHEBELBETÄTIGTE SCHEIBENBREMSE**
HOLDING DEVICE FOR A DISC BRAKE ACTUATED BY A PIVOTED LEVER
DISPOSITIF DE SERRAGE POUR UN FREIN A DISQUE ACTIONNE PAR LEVIER ROTATIF

(30) Priorität: 13.08.2014 DE 102014111546
(43) Veröffentlichungstag der Anmeldung: 24.02.2016
(73) Patentinhaber: KNORR-BREMSE Systeme für Nutzfahrzeuge GmbH, 80809 München (DE)
(72) Erfinder: IRASCHKO, Johann, 85301 Schweitenkrichen (DE)

(56) Entgegenhaltungen:
- WO-A1-2013/143962
- GB-A- 2 039 338
- US-A- 3 717 226

## Beschreibung

Die Erfindung betrifft eine Zuspannvorrichtung einer drehhebelbetätigten Scheibenbremse, insbesondere einer mittels einer Kolbenstange eines pneumatisch oder elektromotorisch betriebenen Bremszylinders betätigbaren Scheibenbremse, nach dem Oberbegriff des Anspruchs 1.

Pneumatisch betätigte Scheibenbremsen weisen in der Regel einen als Schiebesattel, Schwenksattel oder Festsattel ausgebildeten Bremssattel auf, in welchem eine Zuspannvorrichtung angeordnet ist, welche dazu dient, Bremsbeläge beidseits einer Bremsscheibe und die Bremsscheibe miteinander in Wirkverbindung zu bringen, um durch Reibung eine Bremswirkung zu erzielen.

Pneumatisch betätigte Scheibenbremsen gehören mittlerweile zur Standardausrüstung bei schweren Nutzfahrzeugen. Derartige Scheibenbremsen benötigen zur Erzeugung der geforderten Zuspannkraft eine mechanische Übersetzung, da die Kraft der pneumatisch beaufschlagten Bremszylinder wegen des Druckniveaus (derzeit ca. 10 bar) und der limitierten Baugröße der Bremszylinder beschränkt ist. Bei den derzeit bekannten pneumatisch betätigten Scheibenbremsen finden sich Übersetzungsverhältnisse zwischen 10:1 und 20:1.

Derartige Zuspannmechanismen bzw. -vorrichtungen haben sich in unterschiedlichsten Ausführungen mittlerweile auf dem Markt etabliert. Die Kraftübersetzung wird hierbei über einen Hebel mit zwei verschiedenen Hebelarmlängen dargestellt. Dabei wirkt die Bremszylinderkraft am langen Hebelarm und erzeugt so über das Hebelverhältnis am kurzen Hebelarm eine hohe Kraft, welche zum Anpressen der Bremsbeläge an die Bremsscheibe benötigt wird. Zur besseren Verteilung erfolgt die Einleitung der Zuspannkraft in den Bremsbelag häufig über zwei sogenannte Druckstücke, die wiederum über Gewinde- bzw. Zuspannstempel (mit einer Gewindespindel und einer ein Gewinde aufweisenden Hülse oder Traverse) mit der Übersetzungsmechanik gekoppelt sind. Es gibt aber auch Systeme, die mit nur einem Druckstück und einem Gewindestempel ausgeführt sind.

Neben dem oben erwähnten Hebelsystem kann auch ein Rampenmechanismus oder ein Gewindemechanismus zur Kraftübersetzung zum Einsatz kommen.

WO 2013/143962 A1 beschreibt dazu ein Beispiel, das in Fig. 1 dargestellt und nachfolgend kurz erläutert ist.

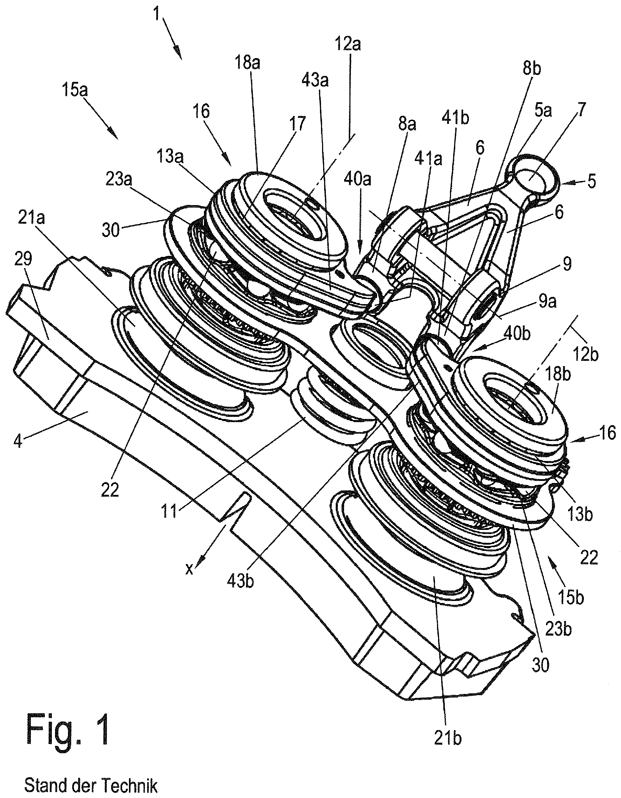

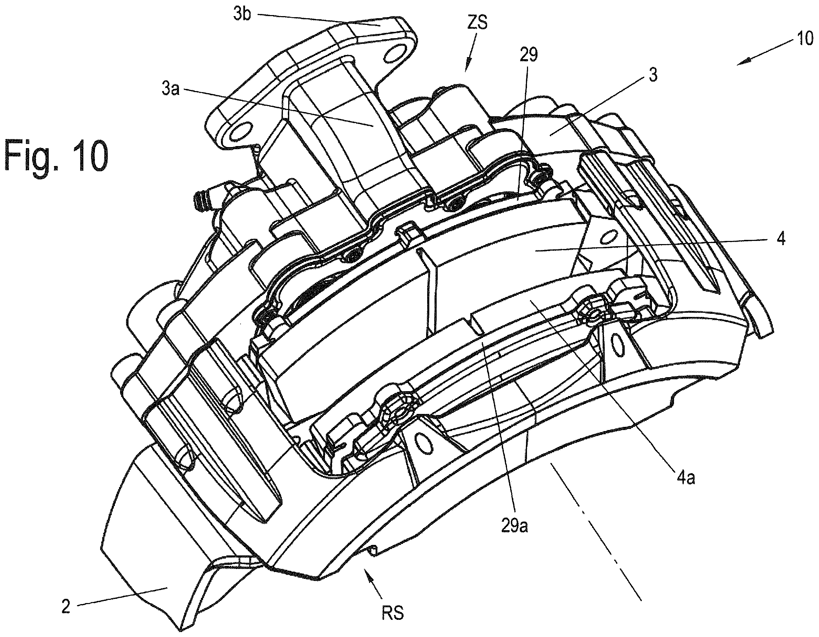

In Fig. 1 ist eine perspektivische Ansicht einer üblichen Zuspannvorrichtungen 1 für drehhebelbetätigte Scheibenbremsen 10 (siehe z.B. Fig. 10) dargestellt.

Eine so genannte zweistempelige bzw. zweispindelige Scheibenbremse 1 mit beidseits einer Bremsscheibe angeordneten Bremsbelägen 4, 4a (siehe Fig. 10) ist mit zwei Wälzkörperzuspanneinheiten 15a, 15b mit einer jeweiligen Spindelachse 12a, 12b gezeigt. Beide Wälzkörperzuspanneinheiten 15a, 15b stehen jeweils über ein Druckstück 21a, 21b mit einer Rückenplatte 29 des so genannten zuspannseitigen Bremsbelags 4 in Verbindung. Außerdem stehen beide Wälzkörperzuspanneinheiten 15a, 15b mit einem in die Bremse integrierten Drehhebel 5 jeweils über einen Koppelmechanismus 40a, 40b in Wirkverbindung.

Der Drehhebel 5 weist zwei Hebelarme 6 und damit verbundene Arme als Antriebssegmente 8a, 8b auf und ist hier mit einem Hebellagerbolzen 9 um eine Hebelachse 9a verschwenkbar im Bremsengehäuse angeordnet. Die Hebelachse 9a verläuft parallel zu einer Bremsscheibe (nicht gezeigt) und quer zu deren Bremsscheibenachse 39 (Fig. 10). Ein Antriebsende 5a des Drehhebels 6 weist eine Vertiefung 7 auf, welche mit einer Kolbenstange eines nicht gezeigten pneumatisch oder elektromotorisch betriebenen Bremszylinders zur Krafteinleitung zusammenwirkt.

Jede Wälzkörperzuspanneinheit 15a, 15b umfasst folgende Bauteile und Funktionseinheiten, welche in der angegebenen Reihenfolge in Richtung auf den Bremsbelag 4 angeordnet sind: ein Axiallager 16 mit Wälzkörpern 17, eine Rampenantriebsscheibe 13a, 13b mit einer Rampenscheibe 23a, 23b, Rampen und Rampenwälzkörpern 22, eine Gewindehülse, eine Gewindespindel mit einem Außengewinde und ein Druckstück 21a, 21b.

Die beiden Wälzkörperzuspanneinheiten 15a, 15b sind jeweils von Zuspannkolben durchsetzt, an deren dem Bremsbelag 4 zugewandten Enden die Druckstücke 21a, 21b angeordnet oder ausgebildet sind. Die Zuspannkolben sind jeweils als Gewindehülsen-/Gewindespindelkombinationen ausgebildet, welche die Gewindespindel und die Gewindehülse aufweisen, die miteinander so verschraubt sind, dass durch ein Relativverschrauben der Gewindehülsen-/Gewindespindelkombinationen Verschleiß der Bremsbeläge 4 und der Bremsscheibe ausgeglichen werden kann, da die Gesamtlänge der Zuspanneinheit 1 in Zuspannrichtung X zwischen der Abstützung an dem Bremsbelag 4 und dem Bremssattel 3 (siehe Fig. 10) verändert wird. Die Gewindehülsen sind jeweils mit einem Flanschbereich an den Rampenreaktionsscheiben 23a, 23b an deren von den Rampenwälzkörpern 22 abgewandten Seiten abgestützt.

Die Axiallager 16 sind jeweils aus einer Stützscheibe 18a, 18b, den Wälzkörpern 17 und einer von dem Bremsbelag 4 abgewandten Seite der Rampenantriebsscheibe 13a, 13b gebildet. Dabei sind die Wälzkörper 17 in Wälzkörperaufnahmen aufgenommen. Eine dieser Wälzkörperaufnahmen ist in der von dem Bremsbelag 4 abgewandten Seite der Rampenantriebsscheibe 13a, 13b eingeformt, wobei die andere Wälzkörperaufnahme in der Stützscheibe 18a, 18b der einen Wälzkörperaufnahme gegenüberliegend angeordnet ist.

Bei einem Zuspannen und Lösen der Bremse wird eine Verschwenkung des Drehhebels 5 über den jeweiligen Koppelmechanismus 40a, 40b auf die jeweilige Rampenantriebsscheibe 13a, 13b in eine Schwenkbewegung um die Spindelachse 12a, 12b übertragen. Eine Rückstellfeder 11 ist vorgesehen, um die Bremse beim Lösen zurückzustellen.

Der Koppelmechanismus 40a, 40b umfasst Kugeln 41a, 41b als Koppelelemente zwischen den Antriebssegmenten 8a, 8b des Drehhebels 5 und Koppelabschnitten 43a, 43b der Rampenantriebsscheiben 13a, 13b.

Die Rampenantriebsscheibe 13a, 13b und die Rampenscheibe 23a, 23b führen hierbei unterschiedliche Bewegungen aus. Die Rampenantriebsscheibe 13a, 13b stützt sich in axialer Richtung über das Axiallager 16 mit dessen Stützscheibe 18a, 18b im Bremsengehäuse, d.h. im Bremssattel 3, ab und führt eine oszillierende Schwenkbewegung um die Spindelachse 12a, 12b aus. Die Rampenscheibe 23a, 23b ist hingegen drehfest gelagert und führt aufgrund der Rampenwälzkörper 22 in Verbindung mit den Rampen eine oszillierende Axialbewegung in Zuspannrichtung X in Richtung der Spindelachse 12a, 12b und wieder zurück aus und bestimmt somit den Zuspannweg des Bremssattels 3.

Bei der in Fig. 1 gezeigten zweistempeligen Bremse ist an jeder Seite des mittigen Drehhebels 5 eine Wälzkörperzuspanneinheit 15a, 15b angeordnet. Durch diese Konfiguration ist es möglich, die beiden Rampenreaktionsscheiben 23a, 23b durch eine so genannte Drehmomentstützplatte 30 miteinander zu verbinden und das Drehmoment der beiden Rampenreaktionsscheiben 23a, 23b gegenseitig abzustützen.

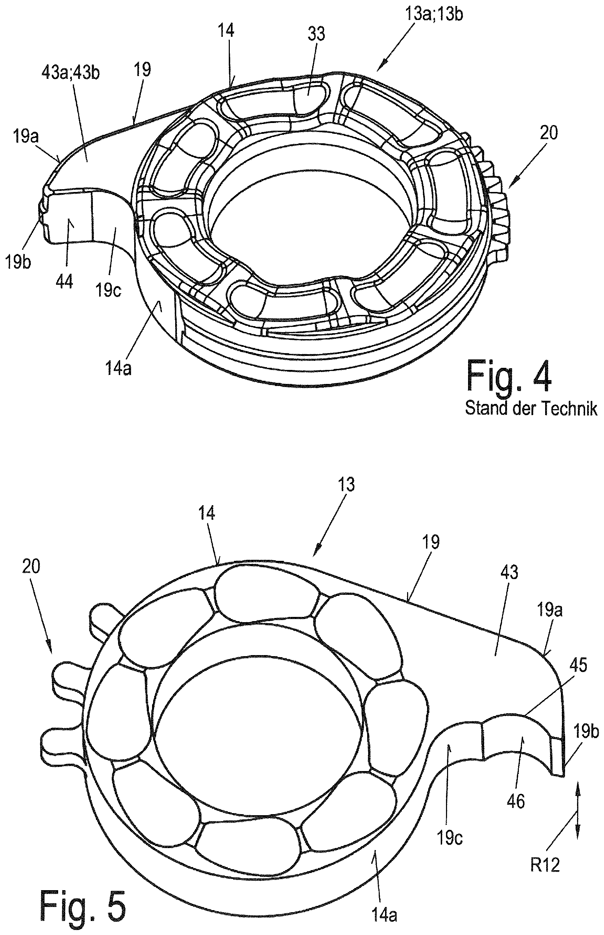

Eine Koppelkraft des Koppelelementes, der Kugel 41, des Koppelmechanismus 40 wird über eine im Wesentlichen plane, sehr harte Planfläche 44 (Fig. 4) auf die Rampenantriebsscheibe 13a, 13b eingeleitet wird, wobei die hohe Hertzsche Pressung zwischen der Kugel 41 und der Planfläche als nachteilig angesehen wird, da Lebensdaueranforderungen nicht erfüllt werden können.

Daher besteht die Aufgabe der Erfindung darin, eine verbesserte Zuspannvorrichtung nicht nur mit einem einfachen konstruktiven Aufbau, sondern auch gleichzeitig mit einem verbesserten Betriebsverhalten, insbesondere hinsichtlich des oben genannten Nachteils und geringem Hystereseverhalten, zu schaffen.

Die Erfindung löst diese Aufgabe durch den Gegenstand des Anspruchs 1.

Demgemäß ist eine Scheibenbremse, insbesondere einer mittels einer Kolbenstange eines pneumatisch oder elektromotorisch betriebenen Bremszylinders betätigbare Scheibenbremse, mit einem Bremssattel, der vorzugsweise rahmenartig einen Randbereich einer Bremsscheibe, an welcher beidseitig mindestens ein Bremsbelag angeordnet ist, übergreift, wobei der Bremssattel auf einer Zuspannseite der Bremsscheibe in einer Öffnung eine Zuspannvorrichtung aufnimmt, geschaffen, und die wenigstens folgende Merkmale aufweist: einen innen liegenden, d.h. im Inneren des Bremssattels angeordneten Drehhebel, der vorzugsweise eine parallel zu der Bremsscheibe ausgerichtete Hebelachse aufweist; wenigstens eine Wälzkörperzuspanneinheit, die eine Spindelachse und wenigstens einen senkrecht zur Bremsscheibe beweglichen Zuspannkolben aufweist, und die zum Überwinden des Arbeitshubes bzw. zum Anlegen des zuspannseitigen Zuspannkolbens mit dem Bremsbelag an die Bremsscheibe infolge eines Verschwenkens des Drehhebels bei Bremsungen ausgelegt ist, wobei die wenigstens eine Wälzkörperzuspanneinheit eine Kugelrampeneinheit mit einer Rampenantriebsscheibe, Rampenkugeln und einer Rampenreaktionsscheibe aufweist, wobei eine Antriebsverbindung zwischen dem Drehhebel und der wenigstens einen Wälzkörperzuspanneinheit als ein Koppelmechanismus mit wenigstens einem abgerundeten Kopplungselement ausgebildet ist. Der Koppelmechanismus umfasst eine Abrollkontur mit einer Konturfläche, welche an einem Koppelabschnitt der Rampenantriebsscheibe angeordnet ist.

Die Abrollkontur mit der zugehörigen Konturfläche ermöglicht eine vorteilhafte Reduzierung der Hertzschen Pressung, so dass Verschleiß bedeutend verringert werden kann, wodurch Lebensdaueranforderungen ohne Einschränkungen erfüllt werden können.

Eine zusätzliche Ausführungsform ist nach Anspruch 2 die Ausgestaltung mit zwei vorzugsweise parallel zueinander ausgerichteten Wälzkörpereinheiten, insbesondere

Kugelrampenmechanismen, welche durch den in diesem Fall vorteilhaft zentral bzw. mittig zwischen diesen positionierten Drehhebel angetrieben werden.

In einer Ausführung sind die drehbaren Teile der wenigstens einen Wälzkörperzuspanneinheit, insbesondere die Kugelrampeneinheiten oder die sonstigen Kugeleinheiten, von Zuspannkolben durchsetzt, die auf eines oder mehrere Druckstücke einwirken, wodurch sich ein kompakter Aufbau ergibt.

Der Antrieb vom Drehhebel zu der/den Wälzkörpereinheit/en, insbesondere den Kugelrampeneinheiten bzw. -mechanismen, erfolgt durch eine Antriebsverbindung, die eine Kugel, Halbkugel, Teilkugel oder Koppelstange sein kann, wobei eine Kugel besonders bevorzugt ist.

Gemäß der Erfindung ist vorgesehen, dass die Abrollkontur mit der Konturfläche eine rillenförmige Einformung ist und eine Krümmung in einer Ebene rechtwinklig zu der Rotationsachse der Rampenantriebsscheibe aufweist. So kann die Kugel als Koppelelement eine Abrollbewegung reibungsarm ausführen.

In weiterer Ausgestaltung kann die Richtung der rillenförmigen Einformung der Abrollkontur mit der Konturfläche zumindest teilweise in einer Richtung zur Spindelachse parallel zur Rotationsachse der Rampenantriebsscheibe angeordnet sein.

Alternativ oder zusätzlich kann die Richtung der rillenförmigen Einformung der Abrollkontur mit der Konturfläche zumindest teilweise in einem Winkel zu der Rotationsachse der Rampenantriebsscheibe verlaufen, wobei der Wert dieses Winkel ungleich 90° und ungleich 180° ist.

Es kann auch alternativ oder zusätzlich vorgesehen sein, dass die Richtung der rillenförmigen Einformung der Abrollkontur mit der Konturfläche zumindest teilweise eine kurvenförmige Ausrichtung aufweist.

Mit den obigen Ausführungen der rillenförmigen Einformung kann die Abrollbewegung der Kugel als Koppelelement je nach Einsatzfall besonders reibungsarm ausgebildet werden. Dabei können natürlich auch zwei oder mehrere Ausbildungen der rillenförmigen Einformung zusammen, d.h. hintereinander verwendet werden. Es ist sogar denkbar, dass zwei oder mehrere solcher Einformungen nebeneinander mit jeweils einer Kugel bzw. einem Koppelelement zur Ausführung kommen können. Weiterhin ist es vorteilhaft, dass die Krümmung der Abrollkontur zu der Kugel hin gekrümmt ist, wobei eine Anschmiegung von Abrollkontur und Kugel erhöht und eine Hertzsche Pressung verringert werden kann.

Dazu ist es außerdem von Vorteil, dass ein Krümmungsmittelpunkt der Abrollkontur im Bereich der Kugel liegt. Eine weitere vorteilhafte Ausführung sieht dabei vor, dass die Krümmung der Abrollkontur einen Radius aufweist, welcher im Wesentlichen mit einem Radius der Kugel korrespondiert.

Die Höhe der Hertzschen Pressung wird stark vom Unterschied der Radien von Kugel und Abrollkontur beeinflusst. Da der Unterschied sehr gering und die Schmiegung von Kugel und Abrollkontur hoch ist, kann eine Reduzierung der Hertzschen Pressung erreicht werden.

Es ist zudem gemäß der Erfindung vorgesehen, dass der Drehhebel axial in Richtung seiner Hebelachse, um die der Drehhebel schwenkbar ist, über die Kugel des Koppelmechanismus in der Abrollkontur mit der Konturfläche in dem Koppelabschnitt der Rampenantriebsscheibe geführt ist. Auf diese Weise ist eine zwangsfreie und eindeutig definierte Bewegung des Koppelmechanismus gewährleistet.

Es ist vorgesehen, dass die Zuspannkolben als längenveränderliche Gewindehülse/Gewindespindelkombinationen ausgebildet ist/sind, der oder die eine zentrische Öffnung in der wenigstens einen Wälzkörperzuspanneinheit durchsetzen. Auch dies trägt zu einem raumsparenden Aufbau bei.

Dadurch dass die Rampenreaktionsscheibe ortsfest im Bremsengehäuse eingebaut ist kann das Reaktionsmoment somit direkt in das Bremsengehäuse bzw. den Bremssattel eingeleitet werden. Eine bewegliche Krafteinleitung kann vermieden werden und die damit verbundenen Reibungsverluste treten nicht auf.

In einer besonders bevorzugten Ausführung ist die Rampenantriebsscheibe um eine Spindelachse verschwenkbar und längs der Spindelachse in einer Zuspannrichtung in Richtung einer Bremsscheibenachse axial verschiebbar. So werden Reaktionsmomente der Kugelrampenanordnung über die Rampenreaktionsscheibe in den Bremssattel geleitet, wobei aus der Schwenkbewegung der Rampenantriebsscheibe gleichzeitig mit ihr eine Axialbewegung zum Zuspannen der Bremse erzeugt wird.

Es in einer bevorzugten Ausführung vorgesehen, dass die wenigstens eine Wälzkörperzuspanneinheit zumindest folgendes aufweist: die Rampenantriebsscheibe mit Rampen, die mit dem Drehhebel über den Koppelmechanismus mit wenigstens einem abgerundeten Kopplungselement gekoppelt ist, Rampenwälzkörper und eine Rampenreaktionsscheibe mit Rampen, wobei die Rampen für die Rampenwälzkörper vorgesehen sind und vorzugsweise rampenförmige Laufbahnen sind, wobei die Rampenreaktionsscheibe fest im Bremssattel eingebaut ist, das Axiallager welches zusammen mit der Rampenantriebsscheibe axial verschiebbar ist, eine Trägerplatte, welche das Axiallager (16) und eine Gewindehülse (26) trägt, und jeweils einen der Zuspannkolben, welcher die wenigstens eine Wälzkörperzuspanneinheit mittig durchsetzt. So wird eine robuste Anordnung bei beengten Platzverhältnissen gewährleistet.

In einer weiteren bevorzugten Ausführung ist die wenigstens eine Wälzkörperzuspanneinheit in axialer Richtung der Spindelachse so aufgebaut, dass die Rampenreaktionsscheibe mit einer Oberseite, die von der Bremsscheibe abgewandt ist, fest im Bremssattel eingebaut ist, wobei an der der Oberseite gegenüberliegenden Seite der Rampenreaktionsscheibe die Rampen angeordnet sind, dass den Rampen gegenüberliegend die Rampen der Rampenantriebsscheibe angeordnet sind, wobei die Rampenwälzkörpern zwischen den Rampen diese kontaktierend angeordnet sind, dass an der den Rampen gegenüberliegenden Seite der Rampenantriebsscheibe Wälzkörperaufnahmen angeordnet sind, denen Wälzkörperaufnahmen der Axiallagerscheibe gegenüberliegen, wobei die Wälzkörper des Axiallagers zwischen den Wälzkörperaufnahmen diese kontaktierend angeordnet sind, dass die Axiallagerscheibe sowohl in einer Bohrung der Trägerplatte eingesetzt ist und um eine Gewindehülse, welche mit dem Zuspannkolben in Verbindung steht, herum koaxial angeordnet ist.

Die Rampenantriebsscheibe gibt die in axialer Richtung wirkende Kraft über das reibungsarme Axiallager, das als Wälzlager ausgebildet ist, in die Axiallagerscheibe ab, die über die Trägerplatte und die Gewindehülse die Kraft an den Gewindestempel und das Druckstück weiterleitet. Das vom Axiallager verursachte Lagerdrehmoment ist so gering, dass die Aufnahme und Weitergabe an den Bremssattel unproblematisch sind.

Weiterhin ist vorgesehen, dass der Drehhebel einen an einem Antriebsende von einer Kolbenstange eines Bremszylinders oder eines sonstigen Antriebs betätigbaren Hebelarm aufweist. Zum anderen Ende hin weist der Drehhebel wenigstens ein Antriebssegment auf, wobei das wenigstens ein abgerundete Koppelelement als wenigstens eine Kugel, eine Halbkugel oder dgl. ausgebildet ist und an dem Antriebssegment angebracht ist.

Bei der Einleitung einer Bewegung in die Zuspannmechanik über die Rampenantriebsscheibe kommt es, wie oben angegeben, in Abhängigkeit von der Rampengeometrie zu einer axialen Positionsänderung zwischen dem Drehhebel und der Rampenantriebsscheibe. Jedoch hat diese Änderung bei der oben beschriebenen Kopplungsart keinen Einfluss auf die Übersetzungskennlinie des Koppel- bzw. des Übertragungsmechanismus, da sich die wirksamen Hebelarme nicht ändern.

In einer weiteren Ausführung weitet sich der Drehhebel zum anderen Ende hin gabelartig auf und weist an einem Ende oder beiden Enden des gabelartigen Bereiches jeweils ein Antriebssegment auf, wobei das wenigstens ein abgerundete Koppelelement jeweils als wenigstens eine Kugel, eine Halbkugel oder dgl. ausgebildet ist und an dem Antriebssegment angebracht ist. Der Drehhebel kann auf diese Weise bei einer einstempeligen Scheibenbremse die Wälzkörperzuspanneinheit zwischen seinen Armen aufnehmen, wodurch ein kompakter Aufbau gewährleistet ist. Außerdem kann der Drehhebel auch bei einer zweistempeligen Bremse Verwendung finden.

In einer weiteren Ausführung ist das abgerundete Koppelelement eine Kugel, welche in dem jeweiligen Antriebssegment des Drehhebels in einer Kalotte kardanisch gelagert ist, wodurch sich Reibungsverluste verringern.

Außerdem ist vorgesehen, dass der Drehhebel in einer Richtung in Richtung seiner Hebelachse, um die er verschwenkbar ist, in dem Bremssattel verschiebbar gelagert ist. Dadurch verringern sich enge Toleranzen und Passungen, wodurch die Herstellung kostengünstiger werden kann.

Die erfindungsgemäße Anordnung bietet noch weitere zahlreiche Vorteile.

So ist durch die bevorzugte konstruktive Gestaltung der Bauteile eine spanlose und kostengünstige Herstellung der Bauteile möglich.

Durch die konzeptbedingte Anordnung der Bauteile ergibt sich für das Sattelgehäuse eine sehr kompakte Bauweise.

Bei einer zweistempeligen Scheibenbremse ergeben sich durch den direkten Kraftfluss geringere Verformungswege an der Mechanik und am Bremssattel (keine Kraftumlenkung, in der Hauptkraftrichtung, keine Biegebelastung an den Komponenten, sowie durch die weit außerhalb der Mitte stattfindende Krafteinleitung in den Bremssattel eine geringere Biegebelastung für das Sattelgehäuse). Hieraus resultiert ein relativ geringer Hubbedarf. Vorteilhaft ist dabei auch die hohe Richtwirkung auf den Bremsbelag, da die Zuspannmechanik direkt im Sattel mit großer Stützweite gelagert ist. Hieraus resultiert ein geringer Umfangsschrägverschleiß.

Es ergibt sich ein gutes Hystereseverhalten über dem gesamten Arbeitsbereich, da alle im primären Kraftfluss befindlichen Bauteile kugelgelagert sind. Dies resultiert wiederum in einem günstigen Betriebsverhalten.

Zudem ergibt sich eine hohe Variabilität bei der Anordnung des Bremszylinders. Von einer axialen bis zu einer radialen Bauform sind alle Anordnungen möglich. Es besteht eine gute Anpassungsfähigkeit an die jeweiligen Einbaubedingungen an der Fahrzeugachse.

Besonders vorteilhaft ist eine eindeutige lineare Bewegung der Zuspannelemente (Druckstücke) realisierbar. Hieraus resultieren die Vorteile einer günstigen Krafteinleitung in den Bremsbelag und einer einfachen Erfassung des Zuspannwegs zur Realisierung von Zusatzfunktionen.

Im Rahmen des Hauptanspruchs ergeben sich zahlreiche alternative Ausführungsformen, von denen einige erwähnt werden sollen.

So können die Wälzkörperzuspanneinheiten mit den Zuspannkolben anstelle mit Kugelrampenmechanismen mit schraubenförmigen Flächen mit zylindrischen oder kegelförmigen Rollelementen oder sogar mit Kugelgewindetriebeinheiten oder Kugelumlaufgewindeeinheiten realisiert werden.

Nachfolgend wird die Erfindung anhand von Ausführungsbeispielen unter Bezug auf die Zeichnung näher beschrieben. Es zeigt:
- Fig. 1: eine perspektivische Ansicht einer üblichen Zuspannvorrichtung für drehhebelbetätigte Scheibenbremsen nach dem Stand der Technik;
- Fig. 2: eine Draufsicht eines Ausführungsbeispiels einer erfindungsgemäßen Zuspannvorrichtung einer erfindungsgemäßen Scheibenbremse;
- Fig. 3: eine Seitenansicht des Ausführungsbeispiels der erfindungsgemäßen Zuspannvorrichtung nach Fig. 2;
- Fig. 4: eine perspektivische Ansicht einer Rampenantriebsscheibe der einer üblichen Zuspannvorrichtung nach Fig. 1;

- Fig. 5: eine perspektivische Ansicht einer Rampenantriebsscheibe einer erfindungsgemäßen Zuspannvorrichtung;
- Fig. 6: eine perspektivische Ansicht einer herkömmlichen Drehhebellagerung von der Zuspannseite;
- Fig. 7: eine vergrößerte Draufsicht der herkömmlichen Rampenantriebsscheibe nach Fig. 1;
- Fig. 8: eine perspektivische Ansicht der erfindungsgemäßen Zuspannvorrichtung nach Fig. 3 von der Zuspannseite mit einer Hebellagerung;
- Fig. 9: eine vergrößerte Draufsicht der Rampenantriebsscheibe nach Fig. 8; und
- Fig. 10: eine perspektivische Ansicht einer erfindungsgemäßen Scheibenbremse.

Fig. 1 gemäß dem Stand der Technik ist bereits oben beschrieben worden. Weitere Erläuterungen zum Aufbau und Funktionsbeschreibungen hierzu können aus der WO 2013/143962 A1 entnommen werden und werden hier nicht wiederholt. Zur Darstellung und Erläuterung von Besonderheiten und Unterschieden wird Fig. 1 jedoch im jeweiligen Fall herangezogen.

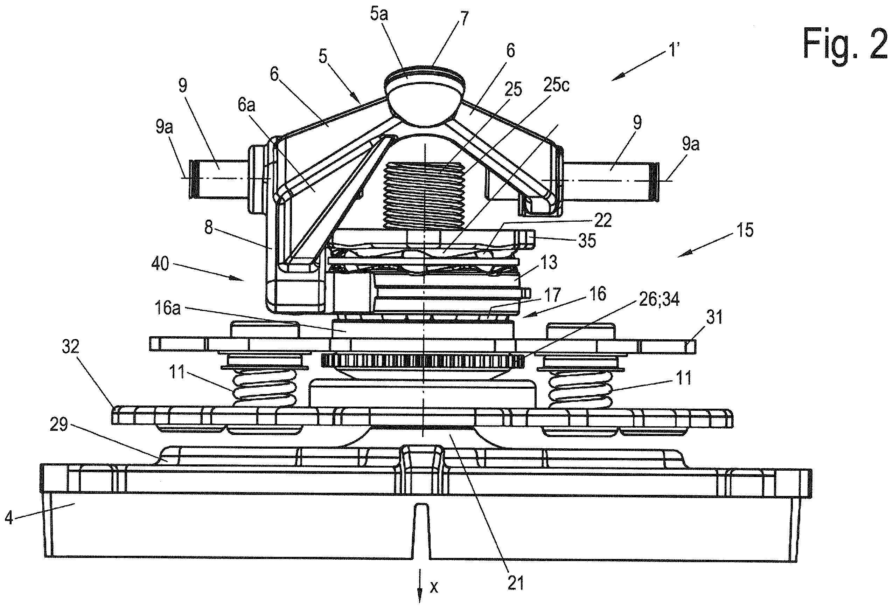

In Fig. 2 ist eine Draufsicht eines Ausführungsbeispiels einer erfindungsgemäßen Zuspannvorrichtung 1' einer erfindungsgemäßen Scheibenbremse 10 dargestellt.

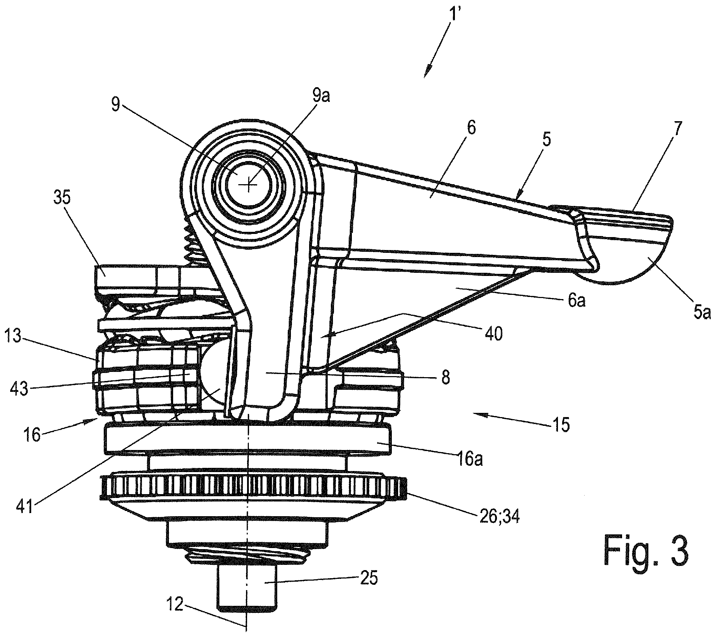

Fig. 3 zeigt eine Seitenansicht des Ausführungsbeispiels der erfindungsgemäßen Zuspannvorrichtung 1' nach Fig. 2. Eine erfindungsgemäße Scheibenbremse 10 ist in Fig. 10 in einer perspektivischen Ansicht gezeigt.

Fig. 2 zeigt die Zuspannvorrichtung 1' mit einer einstempeligen Scheibenbremse 10, von der hier nur der zuspannseitige Bremsbelag 4 mit seiner Rückenplatte 29 dargestellt ist. Eine beispielhafte Draufsicht auf eine solche Scheibenbremse 10 ist in Fig. 10 dargestellt.

Die Zuspannvorrichtung 1' ist in einem Abschnitt einer Zuspannseite ZS eines ein- oder mehrteilige Bremssattels 3, der vorzugsweise als ein Schiebesattel ausgebildet ist, der Scheibenbremse 10 aufgenommen. Der Bremssattel 3 ist an einem Bremsträger 2 - beispielsweise an hier nicht dargestellten Lagern an einem oder in der Regel zwei Lagerbolzen - verschiebbar geführt angebracht. Der Bremssattel 3 umgreift - beispielsweise nach Art des Standes der Technik der EP 0 248 385 A1 - rahmenartig einen Randabschnitt einer nicht gezeigten, aber leicht vorstellbaren Bremsscheibe mit Bremsscheibenachse 39. Beidseits der Bremsscheibe sind Bremsbeläge 4, 4a (zuspannseitiger Bremsbelag 4; reaktionsseitiger Bremsbelag 4a) mit einer jeweiligen Rückenplatte 29, 29a angeordnet, von denen in Fig. 10 beide zu erkennen sind.

Der Bremssattel 3 nimmt an seiner Reaktionsseite RS den reaktionsseitigen Bremsbelag 4a auf und ist an seiner Zuspannseite ZS mit einem Hebelgehäuse 3a versehen, in welchem ein Drehhebel 5 angeordnet ist. Ein Befestigungsflansch 3b dient zur Befestigung eines pneumatischen, elektromotorischen oder federbetätigten Bremszylinders (hier nicht dargestellt).

Mit der Zuspannvorrichtung 1' wird bei Bremsungen der zuspannseitige Bremsbelag 4 parallel zur Bremsscheibenachse 39 in Zuspannrichtung X direkt gegen die Bremsscheibe gepresst, wohingegen der reaktionsseitige Bremsbelag 4a mit dem verschieblichen Bremssattel 3 entgegen der Zuspannrichtung X gegen die Bremsscheibe gezogen wird.

Die Zuspannvorrichtung 1' weist als Antriebselement einen Drehhebel 5 auf, der dazu ausgelegt ist, von einer Kolbenstange eines hier nicht dargestellten Bremszylinders bewegt zu werden. Dazu weist der Drehhebel 5 ein Antriebsende 5a mit einer Vertiefung 7 zur Zusammenwirkung mit einer solchen Kolbenstange auf, wobei die die Kolbenstange des Bremszylinders durch eine Öffnung im Befestigungsflansch 3b des Bremssattels 3 eingreifen kann. Der Drehhebel 5 wird unten noch näher beschrieben.

Die Begriffe "Unterseite" und "Oberseite" von verschiedenen Bauteilen der Zuspannvorrichtung 1' geben die Orientierung dieser Bauteile untereinander an. So ist unter der Oberseite diejenige Seite eines Bauteils zu verstehen, welche von dem Bremsbelag 4 abgewandt ist, wobei die Unterseite zu dem Bremsbelag 4 weist.

Die Zuspannvorrichtung 1' weist eine Wälzkörperzuspanneinheit 15 mit einer Spindelachse 12 auf, welche folgende Bauteile und Funktionseinheiten, die in der angegebenen Reihenfolge in Richtung auf den Bremsbelag 4 angeordnet sind: eine Rampenreaktionsscheibe 35 mit Rampen 33, Rampenwälzkörper 22, eine Rampenantriebsscheibe 13 mit Rampen 33a, ein Axiallager 16 mit Wälzkörpern 17, eine Axiallagerscheibe 16a, eine Trägerplatte 31, eine Gewindehülse 26 mit einem Zahnrad 34, eine Gewindespindel 25 mit einem Außengewinde 25c und ein Druckstück 21. Die Wälzkörperzuspanneinheit 15 ist von einem Zuspannkolben durchsetzt, an dessen dem Bremsbelag 4 zugewandten Ende das Druckstück 21 angeordnet oder ausgebildet ist. Der Zuspannkolben ist als Gewindehülsen-/Gewindespindelkombinationen ausgebildet, welche die Gewindespindel 25 und die Gewindehülse 26 aufweist, die miteinander so verschraubt sind, dass durch ein Relativverschrauben der Gewindehülsen-/Gewindespindelkombinationen Verschleiß der Bremsbeläge 4, 4a und der Bremsscheibe ausgeglichen werden kann, da die Gesamtlänge der Zuspanneinheit 1 in Richtung X zwischen der Abstützung an dem Bremsbelag 4 und dem Bremssattel 3 verändert wird.

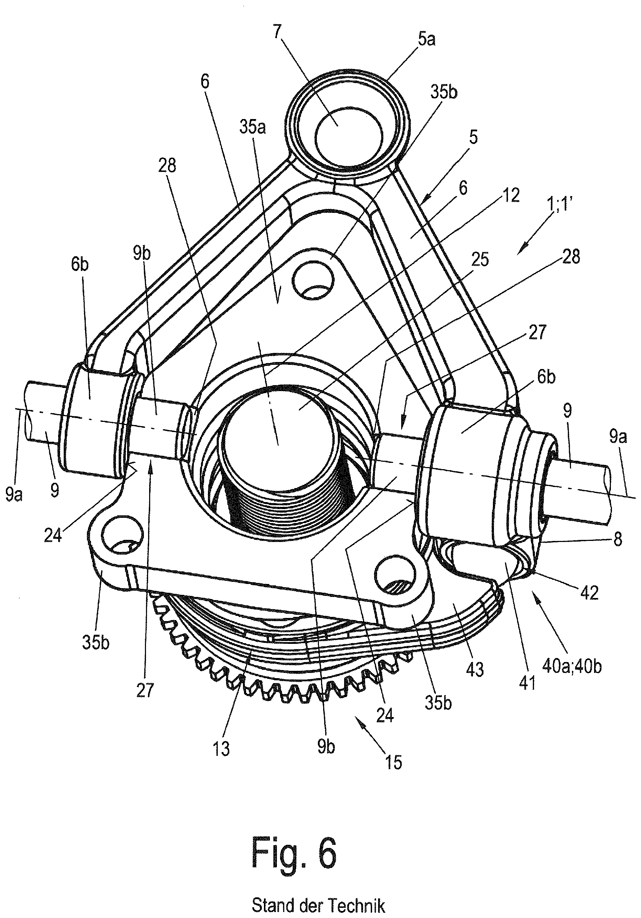

Die Rampenreaktionsscheibe 35 ist mit ihrer Oberseite 35a mit Befestigungsabschnitten 35b auf (siehe z.B. Fig. 6). Mittels nicht gezeigten Befestigungselementen, die z.B. durch die Befestigungsabschnitte 35b hindurch gesteckt sind, ist die Rampenreaktionsscheibe 35 im Bremssattel 3 verdrehfest und unbeweglich angebracht. Die Befestigungselemente können z.B. Schrauben, Schraubbolzen, Stehbolzen o.dgl. sein. Die Oberseite 35a ist hier als eine Planfläche ausgebildet, sie kann aber auch z.B. mit Vorsprüngen oder/und Ausnehmung zur Aufnahme von Vorsprüngen zur Bildung einer drehfesten Anbringung versehen sein.

An ihrer Unterseite ist die Rampenreaktionsscheibe 35 mit den Rampen 33 versehen, welche mit den Rampenwälzkörpern 22, die hier als Kugeln ausgebildet sind, zusammenwirken.

Die Rampenantriebsscheibe 13 ist an ihrer Oberseite mit Rampen 33a versehen, welche den Rampen 33 der Unterseite der Rampenreaktionsscheibe 35 gegenüberliegen. Zwischen den Rampen 33, 33a sind die Rampenwälzkörper 22 angeordnet. Die Rampenreaktionsscheibe 35 mit ihren Rampen 33, die Rampenwälzkörper 22 und die Rampenantriebsscheibe 13 mit den Rampen 33a ihrer Oberseite bilden hier einem Rampenmechanismus, insbesondere einen Kugelrampenmechanismus.

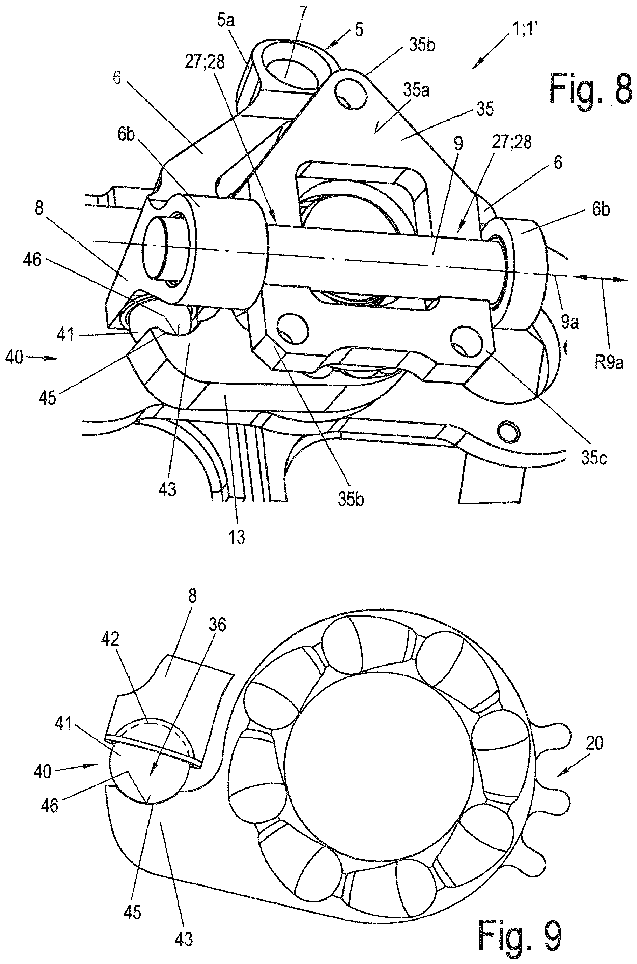

An dem Umfang der Rampenantriebsscheibe 13 ist ein sich radial nach außen erstreckender Vorsprung als Koppelabschnitt 43 (siehe z.B. Fig. 5 und 9) angeformt, welcher unten noch ausführlicher erläutert wird, und zusammen mit einem Koppelelement 41, das hier als Kugel ausgebildet ist (Fig. 3), mit einem Antriebssegment 8 des Drehhebels 5 einen Koppelmechanismus 40 bildet.

Die Unterseite der Rampenantriebsscheibe 13 weist eine Wälzkörperaufnahme zur Zusammenwirkung mit den Wälzkörpern 17 auf. Gegenüberliegend ist die Axiallagerscheibe 16a angeordnet, welcher auf ihrer Oberseite eine weitere Wälzkörperaufnahme aufweist, die zu der einen Wälzkörperaufnahme weist. Zwischen den Wälzkörperaufnahmen sind die Wälzkörper 17 angeordnet und in diesen aufgenommen. Die Wälzkörperaufnahmen sind z.B. Laufrillen wie in einem Axialkugellager. Die Rampenantriebsscheibe 13 mit der einen Wälzkörperaufnahme, die Wälzkörper 17 und die Axiallagerscheibe 16a mit der anderen Wälzkörperaufnahme bilden das Axiallager 16.

Die Axiallagerscheibe 16a ist zusammen mit der Gewindehülse 26 in einer Bohrung der Trägerplatte 31 aufgenommen.

Die Gewindehülse 26 ist mit einem nicht bezeichneten Innengewinde versehen, welches mit dem Außengewinde 25c der Gewindespindel 25 korrespondiert, welche in das Innengewinde der Gewindehülse 26 hineingeschraubt ist.

An dem unteren Ende der Gewindespindel 25 ist das Druckstück 21 angebracht, welches mit seinem unteren Ende in einer Vertiefung der Rückenplatte 29 des zuspannseitigen Bremsbelags 4 angeordnet ist.

Bei der dargestellten Ausführungsform ist die Wälzkörperzuspanneinheit 15 als Kugelrampeneinheit ausgebildet. Dabei sind die Rampen 33, 33a als Rillen in der Unterseite der Rampenreaktionsscheibe 35 und in der Oberseite der Antriebsscheibe 13 ausgebildet und verlaufen hier jeweils derart geneigt in einem konstanten oder veränderlichen Winkel geneigt zu den jeweiligen Seiten der Scheiben 13 bzw. 23 bzw. geneigt zur Bremsscheibenebene (bzw. parallel zur Reibfläche es Bremsbelages 4).

Die Zuspannvorrichtung 1' ist in einer Öffnung der Zuspannseite ZS des Bremssattels 3 angeordnet. Die Öffnung ist von einer Deckplatte 32 verschlossen. Die Zuspannvorrichtung 1' ist an der Deckplatte 32 mit nicht gezeigten Dichtungen, z.B. Faltenbalg, gegenüber der Umgebung abgedichtet. Zwischen der Deckplatte 32 und der Trägerplatte 31 der Zuspannvorrichtung 1' ist an jeder Seite der Zuspannvorrichtung eine Rückstellfeder 11 vorgesehen.

Der Drehhebel 5 weist zwei Hebelarme 6 auf, die sich ausgehend von dem Antriebsende 5a mit der Vertiefung 7 hier in bevorzugter Ausgestaltung gabelartig aufspreizen. An einem Ende der Gabel ist ein Antriebssegment 8 angeordnet, welches mit dem zugehörigen Hebelarm 6 über eine Versteifung 6a zusätzlich verbunden ist. Zwischen den gabelartig gespreizten Hebelarmen 6 ist die Wälzkörperzuspanneinheit 15, vorzugsweise mittig, angeordnet.

Beide Ende der Hebelarme 6 sind verschwenkbar - beispielsweise jeweils mittels eines Gleitlagers - auf einem Hebellagerbolzen 9 mit einer Hebelachse 9a gelagert, der in einem Bereich um die Enden der Hebelarme 6 herum Innenwand des Bremssattels 3 abgestützt ist. Dies wird noch unten weiter erläutert.

Die Hebellagerbolzen 9 können auch direkt mit dem Drehhebel 5 einstückig ausgebildet sein bzw. werden, welcher dann eine entsprechende lagerbolzenartige Konturierung aufweist, die sich in einer entsprechenden Lagerkontur ggf. mit Gleitlager oder Wälzlager am Bremssattel abstützt (hier nicht dargestellt).

Dabei ist an den beiden auf dem Lagerbolzen 9 drehbar bzw. schwenkbar angeordneten Antriebssegmenten 8a, 8b jeweils eine Antriebsverzahnung ausgebildet.

Der Drehhebel 5 ist nur ein Antriebselement, erzeugt aber nicht direkt eine Bewegung in Zuspannrichtung X, um den Arbeitshub an dem Druckstück 21 zu erzeugen. Der Drehhebel 5 kann damit kompakt und kostengünstig ausgelegt werden. Auch kann an ihm auf eine Wälzlagerung - bevorzugt aber nicht zwingend - verzichtet werden.

Bei einem Zuspannen und Lösen der Bremse wird eine Verschwenkung des Drehhebels 5 über den Koppelmechanismus 40 auf die Rampenantriebsscheibe 13 in eine Schwenkbewegung um die Spindelachse 12 übertragen. Eine Rückstellfeder 11 ist vorgesehen, um die Bremse beim Lösen zurückzustellen.

Zum Zuspannen der Scheibenbremse wird bei einer Bewegung der Kolbenstange des Bremszylinders der Drehhebel 5 um die Hebelachse 9a verschwenkt, wobei über den Koppelmechanismus 40 die Rampenantriebsscheibe 13 der Wälzkörperzuspanneinheiten 15 verschwenkt wird und derart hier über die Kugelrampeneinheiten den Zuspannkolben in Zuspannrichtung X parallel zur Bremsscheibenachse 39 unter Überwindung es Bremshubes/Arbeitshubes vorgeschoben wird, bis der Bremsbelag 4 an der Bremsscheibe zur Anlage kommt, um deren Drehung abzubremsen.

Besonders vorteilhaft ist, dass sich die Reaktionskräfte zum Verschieben des Sattels direkt über den Zuspannkolben mit der Wälzkörperzuspanneinheit 15 an der Innenseite des Bremssattels 3 abstützen, und dass sich diese Kräfte nicht über eine Traverse und/oder den Drehhebel 5 hinten am Bremssattel 3 abstützen.

Zu erwähnen ist, dass in Fig. 2 der Einfachheit halber keine Dichtungen zu dem Druckstück 21 dargestellt worden ist, wie sie aber aus dem Stand der Technik grundsätzlich bekannt ist und auch hier vorgesehen werden kann. Auch kann der Bremssattel 3 durchaus auch als einteiliger Bremssattel 3 ausgebildet sein.

Die Zuspannung an dem reaktionsseitigen Bremsbelag 4a kann über einen Schiebesattel erfolgen oder zum Beispiel über eine reaktionsseitige Zuspannvorrichtung oder eine verschiebliche Bremsscheibe, die an den Bremsbelag auf der gegenüberliegenden Seite der Bremsscheibe gepresst wird.

Die Rampenreaktionsscheibe 35 ist bei dem Ausführungsbeispiel der Zuspannvorrichtung 1' nach Fig. 2 ortsfest im Bremssattel 3 eingebaut. Das in ihr entstehende Reaktionsmoment beim Betätigen des Drehhebels 5 kann somit direkt in den Bremssattel 3 eingeleitet werden. Diese Krafteinleitung erfolgt durch die fest verbundenen Bauelemente Rampenreaktionsscheibe 35 und Bremssattel 3. Eine Relativbewegung, d.h. eine bewegliche Krafteinleitung in den Bremssattel 3, wird damit vermieden, wobei natürlich keine Reibungsverluste auftreten.

Beim Zuspannen wird die Rampenantriebsscheibe 13 um die Spindelachse 12 verschwenkt und dabei axial in Zuspannrichtung X verschoben, da die Rampenreaktionsscheibe 35 drehfest im Bremssattel 3 angebracht ist. Durch die Rampenantriebsscheibe 13 und die Rampenreaktionsscheibe 35 wird die Schwenkbewegung der Rampenantriebsscheibe 13 in eine Axialbewegung der Rampenantriebsscheibe 13 umgewandelt. Die dann in axialer Zuspannrichtung X wirkende Kraft wird nun von der Rampenantriebsscheibe 13 über die Wälzkörper 17 auf die Axiallagerscheibe 16a des Axiallagers 16 übertragen. Auf diese Weise wird dann die Zuspannkraft über die Trägerplatte 31 und die Gewindehülse 26 auf die Gewindespindel 25 und das Druckstück 21 und somit auf den Bremsbelag 4 weitergeleitet.

Ein von dem Axiallager 16 verursachtes Lagerdrehmoment ist so gering, dass die Aufnahme und Weiterleitung in das Bremsengehäuse kein Problem darstellt.

Bei der Einleitung der Bewegung in die Wälzkörperzuspanneinheit 5 kommt es in Abhängigkeit der Rampengeometrie der Rampen 33 und 33a der Rampenantriebsscheibe 13 und der Rampenreaktionsscheibe 35 zu einer axialen Positionsänderung in Zuspannrichtung X zwischen dem Drehhebel 5 und der Rampenantriebsscheibe 13.

In der gezeigten Ausführungsform der Zuspannvorrichtung 1' erfolgt die Übertragung der Schwenkbewegung mit Hilfe wenigstens eines Koppelelementes, vorzugsweise eines Wälzkörpers, insbesondere wenigstens einer Kugel 41.

Die Kugel 41 dient als Koppelglied zwischen dem Antriebselement "Drehhebel 5" und dem Abtriebselement "Rampenantriebsscheibe 13".

Anstelle einer Kugel 41 ist aber auch ein anders geformtes, abgerundetes Kopplungselement zur Kopplung des Drehhebels 5 mit der Rampenantriebsscheibe 13 bevorzugt einsetzbar, beispielsweise ein als Halbkugel oder Teilkugel ausgebildetes Kopplungselement, oder eine Koppelstange.

Die geschaffene Ausführungsvariante erfüllt die für die erfindungsgemäße Zuspannvorrichtung 1' erforderlichen Randbedingungen, nämlich eine sehr geringe Winkelgeschwindigkeit (quasistatisch), ein relativ geringer, oszillierender Schwenkwinkel (max. 50°) und lediglich eine nur schwellende (und nicht wechselnde) Belastung, die mit dem Schwenkwinkel kontinuierlich zunimmt.

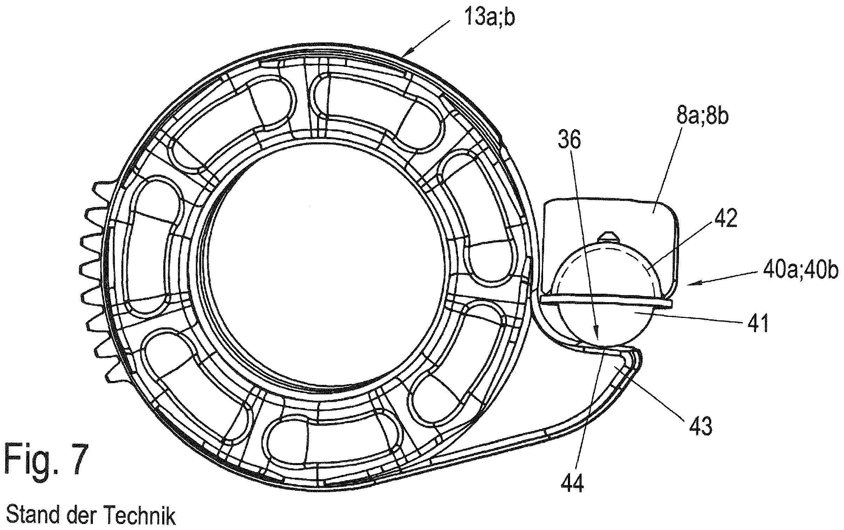

In dem Antriebssegment 8 des Drehhebels 5 ist die Kugel 41 drehbar in einer halbkugelförmigen Kalotte 42 (siehe Fig. 7 oder Fig. 9) reibungsarm gelagert und geführt. Die Kalotte 42 erfüllt die Funktion eines Kugelgelenks und ist vorzugsweise als Gleitlager ausgeführt.

Fig. 4 stellt eine perspektivische Ansicht einer Rampenantriebsscheibe 13a, 13b mit Rampen 33 der üblichen Zuspannvorrichtung 1 nach Fig. 1 dar. Fig. 7 zeigt eine vergrößerte Draufsicht der herkömmlichen Rampenantriebsscheibe 13a, 13b nach Fig. 1 zusammen mit dem Koppelmechanismus .

Der Umfang der Rampenantriebsscheibe 13a, 13b nach dem Stand der Technik ist in mehrere Umfangsseitenabschnitte 14 gegliedert. So weist die Rampenantriebsscheibe 13a, 13b einen sich radial nach außen erstreckenden, nasenförmigen Koppelabschnitt 43a, 43b auf, der im Uhrzeigersinn in Fig. 4 betrachtet, in einen ersten Umfangsseitenabschnitt 14 übergeht. Dem Koppelabschnitt 43a, 43b gegenüberliegend ist eine radial nach außen vorstehende Verzahnung 20 angebracht, welche z.B. für eine Bewegungskopplung mit einer nicht gezeigten Nachstelleinrichtung dient. An diese Verzahnung 20 schließt sich dann weiter im Uhrzeigersinn ein weiterer Umfangsseitenabschnitt 14a an, der an dem Koppelabschnitt 43a, 43b endet.

Der Koppelabschnitt 43a, 43b weist umfangsseitige Flächenabschnitte 19 bis 19c auf, die im Gegenuhrzeigersinn verlaufen. So schließt sich an den Beginn des Umfangsseitenabschnitt 14 der Flächenabschnitt 19 als Schräge mit leichter Krümmung nach innen an und geht in einen kürzeren Flächenabschnitt 19a mit einer größeren Krümmung nach innen über. Der Flächenabschnitt 19a endet in einem noch kürzeren Flächenabschnitt 19b, an den sich die Planfläche 44 radial nach innen verlaufend anschließt. Die Planfläche 44 geht etwa in der Mitte der radialen Erstreckung des nasenförmigen Koppelabschnitts 43a, 43b in einen Flächenabschnitt 19c mit mittlerem Krümmungsradius nach außen gebogen über. Der Flächenabschnitt 19c ist an seinem Ende mit dem Umfangsseitenabschnitt 14a verbunden.

An der Rampenantriebsscheibe 13a, 13b steht die Kugel 41 mit der ebenen Planfläche 44 in Kontakt (Fig. 7) und rollt auf dieser ab. Zwischen der Kugel 41 und der Planfläche 44 ergibt sich in einem Belastungsbereich 36 (Fig. 7) eine sehr hohe Hertzsche Pressung. So ist in der Regel eine hohe Härte der Planfläche 44 erforderlich. Dabei ist die Planfläche 44 quer zur Zuspannrichtung X, in der der zuspannseitige Bremsbelag 4a in Richtung zur Bremsscheibe gedrückt wird, angeordnet. Die auf die Rampenantriebsscheibe 13 wirkende Kraft beim Verschwenken des Drehhebels 5 wirkt daher in eine Kraftrichtung etwa quer zur Zuspannrichtung X.

Während der Zuspann- bzw. Lösebewegung des Drehhebels 5 kann sich die Kugel 41 einerseits in der Kalotte 42 (z.B. Gleitlagerkalotte) des Antriebssegmentes 8a, 8b des Drehhebels 5 kardanisch drehen und an der Planfläche 44 des Koppelabschnitts 43a, 43b der Rampenantriebsscheibe 13a, 13b abwälzen. Der notwendige Freiheitsgrad für den Übertragungsmechanismus ist somit gegeben. Es hat sich bei Versuchen jedoch gezeigt, dass die sehr hohe Hertzsche Pressung zu vorzeitigem Verschleiß führen kann.

Fig. 5 zeigt eine perspektivische Ansicht einer Rampenantriebsscheibe 13 der erfindungsgemäßen Zuspannvorrichtung 1'.

Die Rampenantriebsscheibe 13 gemäß der Erfindung ist so ausgestaltet, dass anstelle der Planfläche 44 eine Abrollkontur 45 mit einer Konturfläche 46 in den Koppelabschnitt 43 eingeformt ist. Bis auf diese Abrollkontur 45 sind die Umfangsseitenabschnitte 14, 14a und Flächenabschnitte 19-19c im Wesentlichen gleich wie diejenigen der im Zusammenhang mit Fig. 4 beschriebenen Rampenantriebsscheibe 13a, 13b. Die Verzahnung 20 weist hier jedoch nur drei Zähne auf.

Die Abrollkontur 45 mit der Konturfläche 46 ist in diesem Ausführungsbeispiel eine rillenförmige Einformung in einer Richtung R12 zur Spindelachse 12 parallel zur Rotationsachse der Rampenantriebsscheibe 13 und weist eine Krümmung in einer Ebene rechtwinklig zu der Rotationsachse der Rampenantriebsscheibe 13 auf, wobei diese Rotationsachse der Rampenantriebsscheibe 13 im zusammengebauten Zustand der Spindelachse 12 der Zuspannvorrichtung 1' entspricht (Fig. 2, Fig. 3). Die Krümmung der Abrollkontur 45 ist zu der Kugel 41 hin gekrümmt. (Fig. 9). Ein Krümmungsmittelpunkt der Abrollkontur 45 liegt im Bereich der Kugel 41. Die Krümmung der Abrollkontur 45 kann einen Radius aufweisen, welcher im Wesentlichen mit dem Radius der Kugel 41 (Fig. 9) korrespondiert.

In einer anderen, nicht gezeigten Ausführung kann die Richtung der rillenförmigen Einformung der Abrollkontur 45 mit der Konturfläche 46 nicht parallel, sondern in einem Winkel zu der Rotationsachse der Rampenantriebsscheibe 13 verlaufen, wobei der Wert dieses Winkel ungleich 90° und ungleich 180° ist. In einer noch anderen, nicht gezeigten Ausführung kann die rillenförmige Einformung der Abrollkontur 45 mit der Konturfläche 46 eine kurvenförmige Ausrichtung aufweisen.

Die Höhe der Hertzschen Pressung wird dabei stark vom Unterschied der Radien von Kugel 41 und Abrollkontur 45 beeinflusst. Je geringer dieser Unterschied und je größer die Schmiegung zwischen Kugel 41 und der Konturfläche 46 der Abrollkontur 45 sind, desto geringer ist die Hertzsche Pressung.

In Fig. 6 ist eine perspektivische Ansicht einer herkömmlichen Drehhebellagerung von der Zuspannseite ZS her gesehen gezeigt.

Die Hebellagerbolzen 9 sind in Lagerabschnitten 6b des Drehhebels 5 aufgenommen, z.B. in Gleitlagerschalen, und mit Hebellagerabschnitten 9b in Lagerbereichen 27 von Lagerungen 28 in der Oberseite 35a der Rampenreaktionsscheibe 35 angeordnet. Die inneren Seiten der Lagerabschnitte 6b des Drehhebels 5 stehen in Kontakt mit Seitenabschnitten der Rampenreaktionsscheibe 35, wodurch Axialanschläge 28 zur axialen Festlegung des Drehhebels 5 in Richtung seiner Hebelachse 9a gebildet sind.

Im Gegensatz zum Stand der Technik nach Fig. 6 wird jedoch der Drehhebel 5 nun über die Kugelrampeneinheit bzw. die Wälzkörperzuspanneinheit 15 axial geführt, damit die Kopplung zwischen dem Drehhebel 5 und der Rampenkugeleinheit der Wälzkörperzuspanneinheit 15 kinematisch zwangsfrei funktioniert.

Hierzu zeigt Fig. 8 eine perspektivische Ansicht der erfindungsgemäßen Zuspannvorrichtung 1' nach Fig. 3 von der Zuspannseite mit einer Hebellagerung 28. Fig. 9 stellt eine vergrößerte Draufsicht der Rampenantriebsscheibe 13 nach Fig. 8 dar.

Der Hebellagerbolzen 9 ist als durchgehende Welle ausgebildet und in Lagerbereichen 27 in Lagerungen 28 in der Rampenreaktionsscheibe 35 angeordnet. Eine axiale Begrenzung in Richtung R9a der Hebelachse 9a ist nicht vorhanden.

Der Drehhebel 5 wird über die Kugel 41 des Koppelmechanismus 40 in der Abrollkontur 45 mit der Konturfläche 46 axial geführt.

Bei Betätigung der Bremse führt der Drehhebel 5 eine Schwenkbewegung um seine Hebelachse 9a aus und bewirkt somit durch die Verbindung mit der Rampenantriebsscheibe 13 über den Koppelmechanismus 40 mit der Kugel 41 eine Verschwenkung der Rampenantriebsscheibe 13 um die Spindelachse 12 (Fig. 2, 3). Wenn die Rampenantriebsscheibe 13 verschwenkt, führt die Kugel 41 aufgrund ihrer Führung in der Abrollkontur 45 der Konturfläche 46 eine um die Schwenkachse der Rampenantriebsscheibe 13, d.h. um die Spindelachse 12, kreisförmige Bewegung aus. Da die Kugel 41 in dem Antriebssegment 8 des Drehhebels 5 in der Kalotte 42 kardanisch gelagert ist, wird nun der Drehhebel 5 eine der Kreisbahn der Kugel 41 entsprechende Axialbewegung in Richtung seiner Hebelachse 9a ausführen. Eine, abgesehen von Reibungskräften, zwangsfreie und eindeutig definierte Bewegung des Koppelmechanismus 40 ist auf diese Weise gewährleistet.

Die Lagerung der wenigstens einen Kugel 41 im Drehhebel 5 erfolgt bevorzugt mittels wenigstens einer korrespondierenden Gleitlagerlagerung. Die wenigstens eine Kugel 41 kann aus Stahl bestehen. Dabei ist die Kalotte 42 bevorzugt aus einem Lagermaterial wie Bronze, einem Bronze-Kunststoff-Verbund, einem Kunststoff, einer Keramik oder als Faserwerkstoff hergestellt.

Anstelle einer Gleitlagerung ist aber ebenfalls eine direkte Lagerung in Verbindung mit geeigneten Schmierstoffen bevorzugt. Weiterhin eignet sich auch eine Wälzlagerung.

Es ergeben sich folgende Vorteile:
- Signifikante Reduzierung der Hertzschen Pressung
- Hohe Robustheit des Koppelmechanismus 40
- Einfache Herstellbarkeit der Funktionsflächen für den Koppelmechanismus 40
- Geringe Anforderungen hinsichtlich Maß- und Lagertoleranzen
- Große Variabilität und Anpassungsfähigkeit bei der Auslegung des Koppelmechanismus 40
- Hoher Freiheitsgrad hinsichtlich Anordnung der Elemente für den Koppelmechanismus 40
- Kostengünstige Ausführung

Ggf. kann eine Nachstellvorrichtung vorgesehen sein (hier nicht dargestellt), die vom Drehhebel 5 angetrieben wird. Diese kann vorzugsweise eine Einwegdrehkupplung und eine Überlastkupplung aufweisen - und zum Drehantrieb der Gewindehülsen 26 um Spindelachse 12 ausgelegt sein, wobei die Gewindespindel 25 (z.B. am Bremsbelag 4) drehfest gehalten ist, wodurch die Nachstellfunktion realisierbar ist. Derartige Nachstellvorrichtungen sind grundsätzlich bekannt und müssen daher hier nicht im Detail dargestellt werden.

Die oben beschriebenen Ausführungsbeispiele schränken die Erfindung nicht ein. Sie ist im Rahmen der beigefügten Ansprüche modifizierbar.

Das Kopplungselement 41 kann auch als wenigstens ein abgerundetes Kopplungselement ausgeführt sein, wobei dies insbesondere eine Kugel, eine Halbkugel, eine Teilkugel oder auch eine Koppelstange sein kann.

So ist z.B. denkbar, dass die Zuspannvorrichtung 1' auch für zwei- oder mehrstempelige Scheibenbremsen verwendet werden kann.

### Bezugszeichen

- 1,1': Zuspannvorrichtung
- 2: Bremsträger
- 3: Bremssattel
- 3a: Hebelgehäuse
- 3b: Befestigungsflansch
- 4, 4a: Bremsbelag
- 5: Drehhebel
- 5a: Antriebsende
- 6: Hebelarm
- 6a: Versteifung
- 6b: Lagerabschnitt
- 7: Vertiefung
- 8, 8a, 8b: Antriebsegment
- 9: Hebellagerbolzen
- 9a: Hebelachse
- 9b: Hebellagerabschnitt
- 10: Scheibenbremse
- 11: Rückstellfeder
- 12, 12a, 12b: Spindelachse
- 13, 13a, 13b: Rampenantriebsscheibe
- 14, 14a: Umfangsseitenabschnitt
- 15, 15a, 15b: Wälzkörperzuspanneinheit
- 16: Axialkugellager
- 16a: Axiallagerscheibe
- 17: Wälzkörper
- 18a, 18b: Stützscheibe
- 19a, 19b, 19c: Flächenabschnitt
- 20: Verzahnung
- 21, 21a, 21b: Druckstück
- 22: Rampenkugel
- 23a, 23b: Rampenscheibe
- 24: Axialanschlag
- 25: Gewindespindel
- 25c: Außengewinde
- 26: Gewindehülse
- 27: Lagerbereich
- 28: Lagerung
- 29, 29a: Rückenplatte
- 30: Drehmomentstütze
- 31: Trägerplatte
- 32: Deckplatte
- 33, 33a: Rampe
- 34: Zahnrad
- 35: Rampenreaktionsscheibe
- 35a: Oberseite
- 35b: Befestigungsabschnitt
- 36: Belastungsbereich
- 39: Bremsscheibenachse
- 40, 40a, 40b: Koppelmechanismus
- 41, 41a, 41b: Kugel, Koppelelement
- 42: Kalotte
- 43, 43a, 43b: Koppelabschnitt
- 44: Planfläche
- 45: Abrollkontur
- 46: Konturfläche
- R12: Richtung der Achse 12
- R9a: Richtung der Achse 9a
- RS: Rückenseite
- ZS: Zuspannseite
- X: Zuspannrichtung

## Patentansprüche

1. Scheibenbremse (10), insbesondere einer mittels einer Kolbenstange eines pneumatisch oder elektromotorisch betriebenen Bremszylinders betätigbare Scheibenbremse (10), mit einem Bremssattel (3), der vorzugsweise rahmenartig einen Randbereich einer Bremsscheibe, an welcher beidseitig mindestens ein Bremsbelag (4, 4a) angeordnet ist, übergreift, wobei der Bremssattel (3) auf einer Zuspannseite (ZS) der Bremsscheibe in einer Öffnung eine Zuspannvorrichtung (1') aufnimmt, und die wenigstens folgende Merkmale aufweist:
a) einen innen liegenden, d.h. im Inneren des Bremssattels (3) angeordneten Drehhebel (5), der vorzugsweise eine parallel zu der Bremsscheibe ausgerichtete Hebelachse (9a) aufweist;
b) wenigstens eine Wälzkörperzuspanneinheit (15), die eine Spindelachse (12) und wenigstens einen senkrecht zur Bremsscheibe beweglichen Zuspannkolben aufweist, und die zum Überwinden des Arbeitshubes bzw. zum Anlegen des zuspannseitigen Zuspannkolbens mit dem Bremsbelag (4) an die Bremsscheibe infolge eines Verschwenkens des Drehhebels (5) bei Bremsungen ausgelegt ist, wobei die wenigstens eine Wälzkörperzuspanneinheit (15) eine Kugelrampeneinheit mit einer Rampenantriebsscheibe (13), Rampenkugeln (22) und einer Rampenreaktionsscheibe (35) aufweist,
c) wobei eine Antriebsverbindung zwischen dem Drehhebel (5) und der wenigstens einen Wälzkörperzuspanneinheit (15) als ein Koppelmechanismus (40) mit wenigstens einem abgerundeten Kopplungselement (41) ausgebildet ist,
d) wobei der Koppelmechanismus (40) eine Abrollkontur (45) mit einer Konturfläche (46) umfasst, welche an einem Koppelabschnitt (43) der Rampenantriebsscheibe (13) angeordnet ist,
e) wobei das wenigstens eine abgerundete Kopplungselement (41) des Koppelmechanismus (40) zwischen dem Drehhebel (5) und der einen oder den zwei oder mehr Wälzkörperzuspanneinheiten (15) wenigstens eine Kugel, eine Halbkugel, eine Teilkugel oder eine Koppelstange ist, **dadurch gekennzeichnet dass**
f) die Abrollkontur (45) mit der Konturfläche (46) eine rillenförmige Einformung ist und eine Krümmung in einer Ebene rechtwinklig zu der Rotationsachse der Rampenantriebsscheibe (13) aufweist, und
g) dass der Drehhebel (5) axial in Richtung (R9a) seiner Hebelachse (9a), um die der Drehhebel (5) schwenkbar ist, über die wenigstens eine Kugel, eine Halbkugel, eine Teilkugel oder eine Koppelstange des Koppelmechanismus (40) in der Abrollkontur (45) mit der Konturfläche (46) in dem Koppelabschnitt (43) der Rampenantriebsscheibe (13) geführt ist.

2. Scheibenbremse (10) nach Anspruch 1, **dadurch gekennzeichnet, dass** zwei oder mehr der Wälzkörperzuspanneinheiten (15) vorgesehen sind.

3. Scheibenbremse (10) nach Anspruch 2, **dadurch gekennzeichnet, dass** die drehbaren bzw. verschwenkbaren Teile der wenigstens einen Wälzkörperzuspanneinheit (15), insbesondere die Kugelrampeneinheiten oder die sonstigen Kugeleinheiten, von Zuspannkolben durchsetzt sind, die auf eines oder mehrere Druckstücke (21) einwirken.

4. Scheibenbremse (10) nach einem der vorstehenden Ansprüche, **dadurch gekennzeichnet, dass** das Kopplungselement (41) als Kugel (41) ausgebildet ist.

5. Scheibenbremse (10) nach Anspruch 4, **dadurch gekennzeichnet, dass** die Richtung der rillenförmigen Einformung der Abrollkontur (45) mit der Konturfläche (46) zumindest teilweise in einer Richtung (R12) zur Spindelachse (12) parallel zur Rotationsachse der Rampenantriebsscheibe (13) angeordnet ist.

6. Scheibenbremse (10) nach Anspruch 5, **dadurch gekennzeichnet, dass** die Richtung der rillenförmigen Einformung der Abrollkontur (45) mit der Konturfläche (46) zumindest teilweise in einem Winkel zu der Rotationsachse der Rampenantriebsscheibe (13) verläuft, wobei der Wert dieses Winkel ungleich 90° und ungleich 180° ist.

7. Scheibenbremse (10) nach Anspruch 5 oder 6, **dadurch gekennzeichnet, dass** die Richtung der rillenförmigen Einformung der Abrollkontur (45) mit der Konturfläche (46) zumindest teilweise eine kurvenförmige Ausrichtung aufweist.

8. Scheibenbremse (10) nach einem der Ansprüche 5 bis 7, **dadurch gekennzeichnet, dass** die Krümmung der Abrollkontur (45) zu der Kugel (41) hin gekrümmt ist.

9. Scheibenbremse (10) nach Anspruch 8, **dadurch gekennzeichnet, dass** ein Krümmungsmittelpunkt der Abrollkontur (45) im Bereich der Kugel (41) liegt.

10. Scheibenbremse (10) nach Anspruch 9, **dadurch gekennzeichnet, dass** die Krümmung der Abrollkontur (45) einen Radius aufweist, welcher im Wesentlichen mit einem Radius der Kugel (41) korrespondiert.

11. Scheibenbremse (10) nach einem der vorstehenden Ansprüche, **dadurch gekennzeichnet, dass** der oder die Zuspannkolben als längenveränderliche Gewindehülse/Gewindespindelkombinationen ausgebildet ist/sind, der oder die eine zentrische Öffnung in der wenigstens einen Wälzkörperzuspanneinheit (15) durchsetzen.

12. Scheibenbremse (10) nach einem der vorstehenden Ansprüche, **dadurch gekennzeichnet, dass** die Rampenreaktionsscheibe (35) der wenigstens einen Wälzkörperzuspanneinheit (15) ortsfest in dem Bremssattel (3) eingebaut ist.

13. Scheibenbremse (10) nach einem der vorstehenden Ansprüche, **dadurch gekennzeichnet, dass** die Rampenantriebsscheibe (13) um die Spindelachse (12) verschwenkbar und längs der Spindelachse (12) in einer Zuspannrichtung (X) in Richtung einer Bremsscheibenachse (39) axial verschiebbar ist.

14. Scheibenbremse (10) nach Anspruch 13, **dadurch gekennzeichnet, dass** die wenigstens eine Wälzkörperzuspanneinheit (15) zumindest folgendes aufweist:
a) die Rampenantriebsscheibe (13) mit Rampen (33a), die mit dem Drehhebel (5) über den Koppelmechanismus (40) mit wenigstens einem abgerundeten Kopplungselement (41) gekoppelt ist, Rampenwälzkörper (22) und eine Rampenreaktionsscheibe (35) mit Rampen (33), wobei die Rampen (33, 33a) für die Rampenwälzkörper (22) vorgesehen sind und vorzugsweise rampenförmige Laufbahnen sind, wobei die Rampenreaktionsscheibe (35) fest im Bremssattel (3) eingebaut ist,
b) das Axiallager (16) welches zusammen mit der Rampenantriebsscheibe (13) axial verschiebbar ist,
c) eine Trägerplatte (31), welche das Axiallager (16) und eine Gewindehülse (26) trägt, und
d) jeweils einen der Zuspannkolben (20, 20a, 20b), welcher die wenigstens eine Wälzkörperzuspanneinheit (15, 15a, 15b) mittig durchsetzt.

15. Scheibenbremse (10) nach Anspruch 14, **dadurch gekennzeichnet, dass** die wenigstens eine Wälzkörperzuspanneinheit (15) in axialer Richtung der Spindelachse (12) so aufgebaut ist, dass die Rampenreaktionsscheibe (35) mit einer Oberseite (35a), die von der Bremsscheibe abgewandt ist, fest im Bremssattel (3) eingebaut ist, wobei an der der Oberseite (35a) gegenüberliegenden Seite der Rampenreaktionsscheibe (35) die Rampen (33) angeordnet sind, dass den Rampen (33) gegenüberliegend die Rampen (33a) der Rampenantriebsscheibe (13) angeordnet sind, wobei die Rampenwälzkörpern (22) zwischen den Rampen (33, 33a) diese kontaktierend angeordnet sind, dass an der den Rampen (33a) gegenüberliegenden Seite der Rampenantriebsscheibe (13) Wälzkörperaufnahmen (19) angeordnet sind, denen Wälzkörperaufnahmen (19a) der Axiallagerscheibe (16a) gegenüberliegen, wobei die Wälzkörper (17) des Axiallagers (16) zwischen den Wälzkörperaufnahmen (19, 19a) diese kontaktierend angeordnet sind, dass die Axiallagerscheibe (16a) sowohl in einer Bohrung der Trägerplatte (31) eingesetzt ist und um eine Gewindehülse (26), welche mit dem Zuspannkolben (20) in Verbindung steht, herum koaxial angeordnet ist.

16. Scheibenbremse (10) nach einem der vorstehenden Ansprüche, **dadurch gekennzeichnet, dass** der Drehhebel (5) einen an einem Antriebsende (5a) von einer Kolbenstange eines Bremszylinders oder eines sonstigen Antriebs betätigbaren Hebelarm (6) aufweist.

17. Scheibenbremse (10) nach Anspruch 16, **dadurch gekennzeichnet, dass** der Drehhebel (5) zum anderen Ende hin wenigstens ein Antriebssegment (8) aufweist, wobei das wenigstens ein abgerundete Koppelelement (41) als wenigstens eine Kugel (41), eine Halbkugel oder dgl. ausgebildet ist und an dem Antriebssegment (8) angebracht ist.

18. Scheibenbremse (10) nach Anspruch 16 oder 17, **dadurch gekennzeichnet, dass** der Drehhebel (5) sich zum anderen Ende hin gabelartig aufweitet und an einem oder beiden Enden des gabelartigen Bereiches jeweils ein Antriebssegment (8, 8a, 8b) aufweist, wobei das wenigstens ein abgerundete Koppelelement (41) jeweils als wenigstens eine Kugel (41), eine Halbkugel oder dgl. ausgebildet ist und an dem Antriebssegment (8) angebracht ist.

19. Scheibenbremse (10) nach einem der Ansprüche 16 bis 18, **dadurch gekennzeichnet, dass** das abgerundete Koppelelement (41) eine Kugel (41) ist, welche in dem jeweiligen Antriebssegment (8, 8a, 8b) des Drehhebels (5) in einer Kalotte (42) kardanisch gelagert ist.

20. Scheibenbremse (10) nach einem der Ansprüche 16 bis 19, **dadurch gekennzeichnet, dass** der Drehhebel (5) in einer Richtung (R9a) in Richtung seiner Hebelachse (9a), um die er verschwenkbar ist, in dem Bremssattel (3) verschiebbar gelagert ist.

## Claims

1. Disc brake (1). in particular disc brake (1) actuable by means of a piston rod of a pneumatically or electromotively operated brake cylinder, with a brake calliper (3), which preferably encompasses an edge region of a brake disc on which at least one brake pad (4, 4d) is located on both sides, wherein the brake calliper (3) accommodates an application device (1') in an opening on an application side (ZS) of the brake disc, the disc brake (1) having at least the following features:
a) an inside rotary lever (5), i.e. located in the interior of the brake calliper (3), which preferably has a lever axis (9a) oriented parallel to the brake disc;
b) at least one rolling body application unit (15), which has a spindle axis (12) and at least one application piston movable at right angles to the brake disc and designed to overcome the working stroke or to apply the application-side application piston with the brake pad (4) to the brake disc as a result of a pivoting of the rotary lever in braking operations, wherein the at least one rolling body application unit (15) comprises a ball ramp unit with a ramp drive disc (13), ramp balls (22) and a ramp reaction disc (35),
c) wherein a drive connection between the rotary lever (5) and the at least one rolling body application unit (15) is designed as a coupling mechanism (40) with at least one rounded coupling element (41),
d) wherein the coupling mechanism (40) comprises a roll-off contour (45) with a contour surface (46) located on a coupling section (43) of the ramp drive disc (13),
e) wherein the at least one rounded coupling element (41) of the coupling mechanism (40) between the rotary lever (5) and the one or the two or more rolling body application units (15) is at least one ball, hemisphere, part-ball or coupling bar, **characterised in that**
f) the roll-off contour (45) with the contour surface (46) is a groove-shaped moulding and has a curvature in a plane perpendicular to the axis of rotation of the ramp drive disc (13), and **in that**
g) the rotary lever (5) is guided axially in the direction (R9a) of its lever axis (9a), about which the rotary lever (5) is pivotable, via the at least one ball, hemisphere, part-ball or coupling bar of the coupling mechanism (40) in the roll-off contour (45) with the contour surface (46) in the coupling section (43) of the ramp drive disc (13).

2. Disc brake (10) according to claim 1, **characterised in that** two or more rolling body application units (15) are provided.

3. Disc brake (10) according to claim 2, **characterised in that** application pistons acting on one or more pressure pads (21) pass through the rotatable or pivotable parts of the at least one rolling body application unit (15), in particular the ball ramp units or other ball units.

4. Disc brake (10) according to any of the preceding claims, **characterised in that** the coupling element (41) is designed as a ball (41).

5. Disc brake (10) according to claim 4, **characterised in that** the direction of the groove-shaped moulding of the roll-off contour (45) with the contour surface (46) is at least partially arranged in a direction (R12) towards the spindle axis (12) parallel to the axis of rotation of the ramp drive disc (13).

6. Disc brake (10) according to claim 5, **characterised in that** the direction of the groove-shaped moulding of the roll-off contour (45) with the contour surface (46) extends at least partially at an angle to the axis of rotation of the ramp drive disc (13), the value of this angle being different from 90° and different from 180°.

7. Disc brake (10) according to claim 5 or 6, **characterised in that** the direction of the groove-shaped moulding of the roll-off contour (45) with the contour surface (46) has an at least partially curved orientation.

8. Disc brake (10) according to any of claims 5 to 7, **characterised in that** the curvature of the roll-off contour (45) is curved towards the ball (41).

9. Disc brake (10) according to claim 8, **characterised in that** the centre of curvature of the roll-off contour (45) lies in the region of the ball (41).

10. Disc brake (10) according to claim 9, **characterised in that** the curvature of the roll-off contour (45) has a radius which substantially corresponds to the radius of the ball (41).

11. Disc brake (10) according to any of the preceding claims, **characterised in that** the application piston(s) is/are designed as a threaded sleeve/threaded spindle combination of variable length, which passes/pass through a central opening in the at least one rolling body application unit (15).

12. Disc brake (10) according to any of the preceding claims, **characterised in that** the ramp reaction disc (35) of the at least one rolling body application unit (15) is installed into the brake calliper (3) in a fixed manner.

13. Disc brake (10) according to any of the preceding claims, **characterised in that** the ramp drive disc (13) is pivotable about the spindle axis (12) and axially displaceable along the spindle axis (12) in an application direction (X) in the direction of a brake disc axis (39).

14. Disc brake (10) according to claim 13, **characterised in that** the at least one rolling body application unit (15) comprises at least the following:
a) the ramp drive disc (13) with ramps (33a), which is coupled to the rotary lever (5) via the coupling mechanism (40) with at least one rounded coupling element (41), ramp rolling bodies (22) and a ramp reaction disc (35) with ramps (33), wherein the ramps (33, 33a) are provided for the ramp rolling bodies (22) and are preferably ramp-shaped tracks, the ramp reaction disc (35) being fixedly installed into the brake calliper (3),
b) the thrust bearing (16), which is axially displaceable together with the ramp drive disc (13),
c) a support plate (31) supporting the thrust bearing (16) and a threaded sleeve (26), and
d) one of the application pistons (20, 20a, 20b) each, which pass through the centre of the at least one rolling body application unit (15, 15a, 15b).

15. Disc brake (10) according to claim 14, **characterised in that** the at least one rolling body application unit (15) is constructed in the axial direction of the spindle axis (12) in such a way that the ramp reaction disc (35) is fixedly installed into the brake calliper (3) with a top side (35a) remote from the brake disc, wherein the ramps (33) are located on the side of the ramp reaction disc (35) which is opposite the top side (35a), **in that** the ramps (33a) of the ramp drive disc (13) are arranged opposite the ramps (33), wherein the ramp rolling bodies (22) are arranged between the ramps (33, 33a) while contacting them, **in that** rolling body receptacles (19), opposite which rolling body receptacles (19a) of the thrust bearing disc (16a) are located, are arranged on the side of the ramp drive disc (13) which is opposite the ramps (33a), wherein the rolling bodies (17) of the thrust bearing (16) are arranged between the rolling body receptacles (19, 19a) while contacting them, and **in that** the thrust bearing disc (16a) is both installed into a hole of the support plate (31) and arranged coaxially around a threaded sleeve (26) connected to the application piston (20).

16. Disc brake (10) according to any of the preceding claims, **characterised in that** the rotary lever (5) has a lever arm (6) actuable at a drive end by a piston rod of a brake cylinder or of another drive.

17. Disc brake (10) according to claim 16, **characterised in that** the rotary lever (5) has at least one drive segment (8) towards the other end, wherein the at least one rounded coupling element (41) is designed as at least one ball (41), hemisphere or the like and attached to the drive segment (8).

18. Disc brake (10) according to claim 16 or 17, **characterised in that** the rotary lever (5) widens in a fork-like fashion towards the other end and has at one end or at both ends of the fork-like region a drive segment (8, 8a, 8b) each, wherein the at least one rounded coupling element (41) is designed as at least one bal (41), hemisphere or the like and attached to the drive segment (8).

19. Disc brake (10) according to any of claims 16 to 18, **characterised in that** the rounded coupling element (41) is a ball (41) cardanically mounted in a calotte (42) in the respective drive segment (8, 8a, 8b) of the rotary lever (5).

20. Disc brake (10) according to any of claims 16 to 19, **characterised in that** the rotary lever (5) is displaceably mounted in the brake calliper (3) in a direction (R9a) in the direction of its lever axis (9a), about which it is pivotable.

## Revendications

1. Frein (10) à disque, notamment frein (10) à disque pouvant être actionné au moyen d'une tige de piston d'un cylindre de frein pneumatique ou fonctionnant par moteur électrique, comprenant un étrier (3) de frein, qui enjambe, de préférence à la manière d'un cadre, une partie de bord d'un disque de frein sur lequel est montée, des deux côtés, au moins une garniture (4, 4a) de frein, l'étrier (3) de frein recevant, d'un côté (ZS) de serrage du frein à disque, dans une ouverture, un système (1') de serrage et ayant les au moins caractéristiques suivantes :
a) un levier (5) tournant, qui se trouve à l'intérieur, c'est-à-dire qui est monté à l'intérieur de l'étrier (3) de frein et qui a, de préférence, un axe (9a) de levier dirigé parallèlement au disque de frein;
b) au moins une unité (15) de serrage à organe de roulement, qui a un axe (12) de broche et au moins un piston de serrage mobile perpendiculairement au disque de frein, et qui est conçue pour surmonter la course de travail ou pour appliquer le piston de serrage du côté du serrage, avec la garniture (4) de frein, au disque de frein en raison d'un pivotement du levier (5) tournant lors de freinages, la au moins une unité (15) de serrage à organe de roulement ayant une unité de rampe à billes, ayant un disque (13) d'entraînement à rampe, des billes (22) de rampe et un disque (35) de réaction à rampe,
c) dans lequel une liaison d'entraînement entre le levier (5) tournant et la au moins une unité (15) de serrage à organe de roulement est constituée sous la forme d'un mécanisme (40) d'accouplement ayant au moins un élément (41) d'accouplement arrondi,
d) dans lequel le mécanisme (40) d'accouplement comprend un contour (45) de roulement ayant une surface (46) de contour, qui est disposée sur une partie (43) d'accouplement du disque (13) d'entraînement à rampe,
e) dans lequel le au moins un élément (41) d'accouplement arrondi du mécanisme (40) d'accouplement, entre le levier (5) tournant et la une ou les deux ou les plusieurs unités (15) de serrage à organe de roulement, est au moins une sphère, une moitié de sphère, une partie de sphère ou une tige d'accouplement, **caractérisé en ce que**
f) le contour (45) de roulement, ayant la surface (46) de contour, est une incorporation en forme de rainure et a une courbure dans un plan perpendiculaire à l'axe de rotation du disque (13) d'entraînement à rampe, et
g) **en ce que** le levier (5) tournant est guidé axialement en direction (R9a) de son axe (9a), autour duquel le levier (5) tournant peut pivoter, par la au moins une sphère, une moitié de sphère, une partie de sphère ou une tige d'accouplement du mécanisme (40) d'accouplement dans le contour (45) de roulement, ayant la surface (46) de contour, dans la partie (43) d'accouplement du disque (13) d'entraînement à rampe.

2. Frein (10) à disque suivant la revendication 1, **caractérisé en ce qu'**il est prévu deux ou plusieurs unités (15) de serrage à organe de roulement.

3. Frein (10) à disque suivant la revendication 2, **caractérisé en ce que** les parties tournantes ou pivotantes de la au moins une unité (15) de serrage à organe de roulement, notamment les unités à rampe à billes ou les autres unités à billes, sont traversées par des pistons de serrage, qui agissent sur une ou plusieurs pièces (21) de poussée.

4. Frein (10) à disque suivant l'une des revendications précédentes, **caractérisé en ce que** l'élément (41) d'accouplement est constitué sous la forme d'une sphère (41).

5. Frein (10) à disque suivant la revendication 4, **caractérisé en ce que** la direction de l'incorporation en forme de rainure du contour (45) de roulement, ayant la surface (46) de contour, est, au moins en partie, dans une direction (R12) vers l'axe (12) de broche, parallèle à l'axe de rotation du disque (13) d'entraînement à rampe.

6. Frein (10) à disque suivant la revendication 5, **caractérisé en ce que** la direction de l'incorporation en forme de rainure du contour (45) de roulement, ayant la surface (46) de contour, s'étend, au moins en partie, en faisant un angle avec l'axe de rotation du disque (13) d'entraînement à rampe, la valeur de cet angle étant différente de 90° et différente de 180°.

7. Frein (10) à disque suivant la revendication 5 ou 6, **caractérisé en ce que** la direction de l'incorporation en forme de rainure du contour (45) de roulement, ayant la surface (46) de contour, a, au moins en partie, une direction en forme de courbe.

8. Frein (10) à disque suivant l'une des revendications 5 à 7, **caractérisé en ce que** la courbure du contour (45) de roulement est courbée vers la sphère (41).

9. Frein (10) à disque suivant la revendication 8, **caractérisé en ce qu'**un centre de courbure du contour (45) de roulement se trouve dans la région de la sphère (41).

10. Frein (10) à disque suivant la revendication 9, **caractérisé en ce que** la courbure du contour (45) de roulement a un rayon, qui correspond sensiblement à un rayon de la sphère (41).

11. Frein (10) à disque suivant l'une des revendications précédentes, **caractérisé en ce que** le ou les pistons de serrage est/sont constitué(s) sous la forme de combinaisons de longueur variable de douille filetée/broche filetée, qui passent dans une ouverture centrale de la au moins une unité (15) de serrage à organe de roulement.

12. Frein (10) à disque suivant l'une des revendications précédentes, **caractérisé en ce que** le disque (35) de réaction à rampe de la au moins une unité (15) de serrage à organe de roulement est incorporé à poste fixe dans l'étrier (3) de frein.

13. Frein (10) à disque suivant l'une des revendications précédentes, **caractérisé en ce que** le disque (13) d'entraînement à rampe peut pivoter autour de l'axe (12) de la broche et peu coulisser axialement le long de l'axe (12) de la broche dans une direction (X) de serrage dans la direction d'un axe (39) de disque de frein.

14. Frein (10) à disque suivant la revendication 13, **caractérisé en ce que** la au moins une unité (15) de serrage à organe de roulement a au moins ce qui suit :
a) le disque (13) d'entraînement à rampe (33a), qui, par le levier (5) tournant, par l'intermédiaire du mécanisme (40) d'accouplement, est accouplé à au moins un élément (41) d'accouplement arrondi, des organes (22) de roulement de rampe et un disque (35) de réaction à rampe (33), les rampes (33, 33a) étant prévues pour les organes (22) de roulement à rampe et étant de préférence des pistes de roulement en forme de rampe, le disque (35) de réaction à rampe étant incorporé fixement dans l'étrier (3) de frein,
b) le palier (16) axial, qui peut coulisser axialement ensemble avec le disque (13) d'entraînement à rampe,
c) une plaque (31) de support, qui porte le palier (16) axial et un manchon (26) fileté et
d) respectivement l'un des pistons (20, 20a, 20b) de serrage, qui traverse au milieu la au moins une unité (15, 15a, 15b) de serrage à organe de roulement.

15. Frein (10) à disque suivant la revendication 14, **caractérisé en ce que** la au moins une unité (15) de serrage à organe de roulement est constituée, dans la direction axiale de l'axe 12 de la broche, de manière à ce que le disque (35) de réaction à rampe soit, par un côté (35a) supérieur, qui est loin du disque de frein, incorporé fixement dans l'étrier (3) de frein, dans lequel, du côté opposé au côté (35a) supérieur du disque (35) de réaction à rampe, les rampes (33) sont disposées de manière à ce que les rampes (33a) du disque (13) d'entraînement à rampe soient opposées aux rampes (33), les organes (22) de roulement de rampe étant disposés entre les rampes (33, 33a) en étant en contact avec celles-ci, **en ce que**, du côté, opposé aux rampes (33), du disque (13) d'entraînement à rampe, sont disposés des logements (19) d'organe de roulement auxquels sont opposés des logements (19a) d'organe de roulement du disque (16a) à palier axial, les organes (17) de roulement du palier (16) axial étant disposés entre les logements (19, 19a) d'organe de roulement en étant en contact avec ceux-ci, **en ce que** le disque (16a) de palier axial est inséré, tant dans un trou de la plaque (31) de support, que disposé coaxialement autour d'un manchon (26) fileté, qui est en liaison avec le piston (20) de serrage.

16. Frein (10) à disque suivant l'une des revendications précédentes, **caractérisé en ce que** le levier (5) tournant a un bras (6) de levier pouvant être actionné, à une extrémité (5a) d'entraînement, par une tige de piston d'un cylindre de frein ou d'un autre entraînement.

17. Frein (10) à disque suivant la revendication 16, **caractérisé en ce que** le levier (5) tournant a, vers l'autre extrémité, au moins un segment (8) d'entraînement dans lequel le au moins un élément (41) d'accouplement arrondi est constitué sous la forme d'au moins une sphère (41) une moitié de sphère ou analogue et est monté sur le segment (8) d'entraînement.

18. Frein (10) à disque suivant la revendication 16 ou 17, **caractérisé en ce que** le levier (5) tournant s'élargit en forme de fourche vers l'autre extrémité et a, à une extrémité ou aux deux extrémités de la partie en forme de fourche, respectivement un segment (8, 8a, 8b) d'entraînement, dans lequel le au moins un élément (41) d'accouplement arrondi est constitué respectivement sous la forme d'au moins une sphère (41), une moitié de sphère ou analogue et est monté sur le segment (8) d'entraînement.

19. Frein (10) à disque suivant l'une des revendications 16 à 18, **caractérisé en ce que** l'élément (41) d'accouplement arrondi est une sphère (41), qui et montée à la cardan dans une calotte (42) dans le segment (8, 8a, 8b) d'entraînement respectif du levier (5) tournant.

20. Frein (10) à disque suivant l'une des revendications 16 à 19, **caractérisé en ce que** le levier (5) tournant est monté coulissant dans l'étrier (3) de frein, dans une direction (R9a), dans la direction de son axe (9a) de levier autour duquel il peut pivoter.
